Europäisches Patentamt

European Patent Office

Office européen des brevets

(11) Publication number: **0 346 149**
A2

# EUROPEAN PATENT APPLICATION

(21) Application number: 89305875.0

(22) Date of filing: 09.06.89

(51) Int. Cl.⁴: **C 08 L 23/12**
C 08 L 51/06, C 08 L 21/00,
C 08 L 77/00, C 08 K 7/08,
C 08 K 3/22

(30) Priority: 09.06.88 JP 140575/88

(43) Date of publication of application:
13.12.89 Bulletin 89/50

(84) Designated Contracting States:
BE DE FR GB IT NL SE

(71) Applicant: TONEN SEKIYUKAGAKU KABUSHIKI
KAISHA
1-1, Tsukiji 4-chome Chuo-ku
Tokyo 104 (JP)

(72) Inventor: Sakuma, Masato
17-12, Harigaya 2-chome
Urawa-shi Saitama-ken (JP)

Kitano, Kissho
1-G-1103, Ogura 1-chome Saiwai-ku
Kawasaki-shi Kanagawa-ken (JP)

Fujita, Yuji
4-3-321, Nishitsurugaoka 1-chome Ooi-machi
Iruma-gun Saitama-ken (JP)

Sakaizawa, Masao
20-1-131, Hirato 1-chome Totsuka-ku
Yokohama-shi Kanagawa-ken (JP)

Yagi, Yukihiko
16-24, Okamura 4-chome Isogo-ku
Yokohama-shi Kanagawa-ken (JP)

(74) Representative: Dew, Melvyn John et al
Exxon Chemical Limited Exxon Chemical Technology
Centre P.O. Box 1
Abingdon Oxfordshire, OX13 6BB (GB)

(54) Thermoplastic resin composition incorporated with whisker and process for producing the same.

(57) The present invention relates to a thermoplastic resin
composition comprising (a) modified PP, (b) polyamide, (c)
modified EPR, (d) potassium titanate whisker and (e) filler
(optional).

**Description**

**Thermoplastic resin composition incorporated with whisker and process for producing the same.**

The present invention relates to a thermoplastic resin composition incorporated with whisker and also to a process for producing the same. The thermoplastic resin composition is useful as an engineering plastics because of its improved mechanical strength and low coefficient of linear expansion (or coefficient of thermal expansion) and hence low dimensional change with temperature.

A technique used to improve the heat resistance of a polymer composition composed mainly of modified polypropylene, polyamide, and modified ethylene-α-olefin copolymer is the incorporation of the matrix with a filler such as talc, mica, wollastonite, and glass fiber. (See Japanese Patent Laid-open No. 53550/1985.)

In fact, this technique leads to a great decrease in impact resistance and surface gloss but does not lead to a substantial reduction of the linear expansion coefficient. Therefore, it has never been used in the fields where impact resistance, high surface gloss, and high dimensional accuracy are required.

The present invention was completed to develop a technique to improve stiffness and heat resistance and lower the linear expansion coefficient without sacrificing impact strength and surface gloss.

The first aspect of the present invention resides in a thermoplastic resin composition incorporated with whisker which comprises:

(a) 1-90 parts by weight of modified polypropylene partly or entirely modified with an unsaturated carboxylic acid or a derivative thereof;

(b) 1-90 parts by weight of polyamide;

(c) 1-50 parts by weight of modified rubber partly or entirely modified with an unsaturated carboxylic acid or a derivative thereof for 100 parts by weight of the total amount of said components (a) and (b);

(d) 1-50 parts by weight of potassium titanate whisker having a fiber diameter of 0.1-1.0 μm and a fiber length of 5-50 μm for 100 parts by weight of the total amount of said components (a), (b), and (c); and

(e) 0-50 parts by weight of a filler for 100 parts by weight of the total amount of said components (a), (b), and (c).

the second aspect of the present invention resides in a process for producing said thermoplastic resin composition incorporated with whisker, said process comprising melt-mixing components (a), (b), (c), and (e) in an extruder and feeding potassium titanate whisker [(component (d)] to the extruder at an intermediate point somewhere between the front and rear ends of the extruder. The resin composition is pelletized or crushed into a molding material.

the modified polypropylene [component (a)] used in the present invention is an acid-modified propylene polymer. The base propylene polymer for acid modification includes propylene homopolymers and propylene-α-olefin copolymers. The α-olefin includes, for example, ethylene and 1-butene. The copolymers may be either block copolymers or random copolymers.

The modified polypropylene is formed by modifying the above-mentioned base material partly or entirely with an unsaturated carboxylic acid or a derivative thereof. The ratio of modification should preferably be 0.01-5 wt%.

With the ratio of modification lower than 0.01 wt%, the thermoplastic resin composition of the present invention does not have sufficient mechanical strength such as tensile strength due to poor compatibility with resin components. On the other hand, with the ratio of modification higher than 5 wt%, the thermoplastic resin composition is not improved in impact strength and molding fluidity.

This modified polypropylene can be obtained by melt-mixing 100 parts by weight of base polypropylene, 0.05-5 parts by weight of an unsaturated carboxylic acid or a derivative thereof, and 0.05-5 parts by weight of an organic peroxide.

Examples of the unsaturated carboxylic acid include maleic acid, crotonic acid, end-cis-bicyclo(2.2.1)hept-5-ene-2,3-dicarboxylic acid, fumaric acid, acrylic acid, and isocrotonic acid. Examples of the derivative of the unsaturated carboxylic acid include acid anhydrides (such as maleic anhydride), acid halides, amides, imides, and esters.

Examples of the organic peroxide include benzoyl peroxide, dichlorobenzoyl peroxide, dicumyl peroxide, and lauroyl peroxide. the orgnaic peroxide may be replaced by a radical initiator used for the acid modification. Examples of the radical initiator include azobisisobutyronitrile and other azo compounds.

The modified polypropylene [component (a)] used in the present invention may be constituted from a single species of the above-mentioned modified polypropylene or a mixture composed of a modified propylene polymer and an unmodified propylene polymer. The mixture should preferably contai the unsaturated carboxylic acid in an amount specified above.

The polyamide [component (b)] used in the present invention includes, for example, polyamides obtained by the polycondensation of a diamine and a dicarboxylic acid, polyamides obtained by the condensation of a polyamide and an aminocarboxylic acid, and polyamides obtained by the ring opening of a lactam. They may be a copolymer or a mixture of two or more polyamides. Examples of the polyamide (nylon) [component (b)] include nylon-6, nylon-9, nylon-11, nylon-12, nylon-66, nylon-610, nylon-612, nylon-46, and aromatic nylon.

The modified rubber [component (c)] used in the present invention is one which is obtained by modifying a base rubber material with an unsaturated carboxylic acid or a derivative thereof in the same manner as used for the preparation of the above-mentioned modified polypropylene.

The modification may be accomplished by using the above-mentioned unsaturated carboxylic acid or a derivative thereof as a graft monomer. The modification may also be accomplished by the aid of the above-mentioned radical initiator (organic peroxide).

The rubber base material for modification that can be used in the present invention is a homopolymer or copolymer of $\alpha$-olefins having two or more carbon atoms. Examples of the $\alpha$-olefin include ethylene, propylene, 1-butene, 1-hexene, 4-methylpentene, and 1-decene.

The rubber base material for modification may also include terpolymers of ethylene, $\alpha$-olefin, and non-conjugated diene, in addition to bipolymers of ethylene and the above-exemplified $\alpha$-olefin. Examples of the non-conjugated diene include 1,4-hexadiene, dicyclopentadiene, and 5-ethylidene-2-norbornene. The rubber base material for modification may also include rubbers obtained from an aromatic vinyl monomer and a diene.

The modified rubber [component (c)] may be derived from ethylene propylene rubber (EPR), ethylene-1-butene rubber (EBR), EPDM (a terpolymer composed of an ethylene-propylene rubber and a third component such as dicyclopentadiene and ethylidenenorbornene), hydrogenated products of styrene-butadiene block copolymer or triblock copolymer, acrylic rubber, polyisobutylene, epichlorohydrin rubber, polyamide elastomer, and polyester rubber.

The ratio of modification of the modified rubber [component (c)] should preferably be 0.01-5.0 wt%.

With the ratio of modification lower than 0.01 wt%, the modified rubber is poor in compatibility with the polyamide and the thermoplastic resin composition of the present invention has a low impact strength. On the other hand, with the ratio of modification higher than 5.0 wt%, the resin composition of the present invention is not improved in impact strength.

The modified rubber [component (c)] used in the present invention may be constituted from a single species of the above-mentioned modified rubber or a mixture composed of a modified rubber and an unmodified rubber. The mixture should preferably contain the unsaturated carboxylic acid in an amount specified above.

The potassium titanate whisker [component (d)] used in the present invention should have a fiber diameter of 0.1-1.0 μm and a fiber length of 5-50 μm.

The potassium titanate whisker as specified above causes the resin composition to have balanced mechanical strength, impact strength, linear expansion coefficient, and surface appearance. The one having the diameter and length greater than the specified range impairs impact strength and surface appearance (such as gloss) although it improves strength. On the other hand, the one having the diameter and length smaller than the specified range does not improve the linear expansion coefficient and strength although it improves surface appearance.

According to the present invention, the matrix composed of the above-mentioned polypropylene, polyamide, and modified rubber is incorporated with potassium titanate whisker and filler (optional).

The filler [component (e)] which may be used in the present invention includes, for example, silicates (such as talc, clay, bentonite and attapulgite), carbonates (such as calcium carbonate and magnesium carbonate), sulfates (such as barium sulfate), mica, glass fiber, and carbon fiber, which are in general use in the field relating to the present invention.

The thermoplastic resin composition of the present is comprised of:

    (a) 1-90 parts by weight of modified polypropylene;

    (b) 1-90 parts by weight of polyamide;

    (c) 1-50 parts by weight of modified rubber for 100 parts by weight of the total amount of said components (a) and (b);

    (d) 1-50 parts by weight potassium titanate whisker having a fiber diameter of 0.1-1.0 μm and a fiber length of 5-50 μm for 100 parts by weight of the total amount of said components (a), (b), and (c); and

    (e) 0-50 parts by weight of a filler for 100 parts by weight of the total amount of said components (a), (b), and (c).

In the total amount of the modified polypropylene [component (a)] and the polyamide [component (b)], the amount of the former should be 1 to 90 parts by weight. With an amount less than 1 part by weight, it does not improve the resin composition in water resistance and moldability. With an amount more than 90 parts by weight, it does not improve the resin composition in heat resistance and mechanical strength.

The amount of the modified rubber [component (c)] should be 1 to 50 parts by weight. With an amount less than 1 part by weight, it does not improve the resin composition in impact resistance. With an amount more than 50 parts by weight, it impairs the surface appearance.

The amount of the potassium titanate whisker [component (d)] should be 1 to 50 parts by weight. With an amount less than 1 part by weight, it does not improve the resin composition in mechanical strength and heat resistance. With an amount more than 50 parts by weight, it impairs the surface appearance.

In the case where the filler is used, an excess amount of the filler aggravates moldability, unbalances impact strength and mechanical strength, and dulls the surface gloss of the molded articles. With an excessively small amount, it does not produce its effect.

According to the present invention, the potassium titanate whisker should be incorporated in the resin composition in a special manner. If the above-mentioned components are mixed all at once, the whisker is broken and the resulting resin composition has a low mechanical strength. Therefore, it is desirable that the modified polyproylene (a), polyamide (b), modified rubber, [and optional filler (e)] should be dry-blended using

3

a Henschel mixer, V-blender, ribbon blender, or tumbler blender, and the resulting dry blend should be melt-mixed using an extruder and the whisker should be fed to the extruder at an intermediate point somewhere between the front and rear ends of the extruder. A preferred amount of the filler is 0.5-50parts by weight.

The extruder should preferably be one which has an L/D ratio greater than 25 (L representing the screw length and D representing the screw diameter).

According to the present invention, it is desirable that the potassium titanate whisker should be fed to the extruder at an inter mediate point corresponding to 3/5-4/5 of the screw length, or a position corresponding to an L/D ratio of 15-20.

the melt-mixing of the components may also be accomplished by using a kneader or Banbury mixer.

The thus obtained resin composition may be provided in the form of pellets or powder.

The resin composition of the present invention may be incorporated with a variety of additives such as slip agent, antistatic agent, and flame retardant.

The thermoplastic resin composition incorporated with whisker pertaining to the present invention has a low linear expansion coefficient (and hence a small dimensional change with temperature), good surface gloss, high impact resistance, high stiffness, and good heat resistance. Therefore, it will find use as an engineering plastic molding material for automotive parts and household electric appliances which have the above-mentioned characteristic properties.

*Examples*

The invention will be explained in more detail with reference to the following examples. The resin compositions obtained in the examples were tested for properties according to the following test methods.

Linear expansion coefficient: ASTM D-696

Tensile strength: JIS K-7113

Flexural modulus: JIS K-7203 (23°C)

Izod impact strength: JIS K-7110, with notch, (23°C)

Heat distortion temperature: JIS K-7207, with a load of 4.6 kg/cm$^2$

Gloss (60°): JIS K-7110

Example 1

The following components were dry-blended using a tumbler blender.

(1) 40 parts by weight of nylon-6.

(2) 60 parts by weight of maleic anhydride-modified polypropylene (with a modification ratio of 0.5 wt%) prepared by melt-mixing 100 parts by weight of propylene homopolymer, 1.0 part by weight of maleic anhydride, and 0.05 parts by weight of 2,5-dimethyl-2,5-di (t-butyl peroxy) hexene-3. (This component will be referred to as PP + CMP hereinafter.)

(3) 20 parts by weight of maleic anhydride-modified EPR (with a modification ratio of 0.3 wt%) prepared by melt-mixing 100 parts by weight of EPR, 0.3 part by weight of maleic anhydride, and 0.05 parts by weight of 2,5-dimethyl-2.5-di (t-butyl peroxy) hexine-3 (for 100 parts by weight of total amount of the nylon-6 and modified polypropylene).

The resulting dry-blend was extruded through an extruder having an L/D ratio of 25. During extrusion, 20 parts by weight of potassium titanate whisker ("Tismo-D", having a fiber diameter of 0.2 - 0.5 μm and a fiber length of 10 - 20 μm, a product of Ohtsuka Kagaku Co., Ltd.) was fed to the extruder at an intermediate point corresponding to an L/D ratio of about 15. The extrudate was pelletized at 250°C. After drying, the pellets were made into specimens by injection molding at 250°C, and the specimens were tested for physical properties. The results are shown in Table 1.

Example 2

The same procedure as in Example 1 was repeated, except that the amount of the potassium titanate whisker was changed to 30 parts by weight. The results are shown in Table 1.

Example 3

The same procedure as in Example 1 was repeated, except that the amount of the potassium titanate whisker was changed to 10 parts by weight and 20 parts by weight of talc was added. The results are shown in Table 1.

Example 4

The same procedure as in Example 1 was repeated, except that the amount of the potassium titanate whisker was changed to 15 parts by weight and the amount of the talc was changed to 15 parts by weight. The results are shown in Table 1.

Example 5

The same procedure as in Example 4 was repeated, except that the amount of the potassium titanate whisker was changed to 20 parts by weight and the amount of the talc was changed to 10 parts by weight. The results are shown in Table 1.

Example 6

The same procedure as in Example 1 was repeated, except that the amount of the modified EPR was changed to 30 parts by weight. The results are shown in Table 1.

Example 7

The same procedure as in Example 1 was repeated, except that the amount of the nylon-6 was changed to 70 parts by weight, the kind of the maleic anhydride-modified polypropylene was changed to one (having a modification ratio of 0.5 wt%) which was prepared by melt-mixing 100 parts by weight of propylene-ethylene block copolymer, 1.0 part by weight of maleic anhydride, and 0.05 parts by weight of α-bis-*tert*-butylperoxy diisopropylbenzene, the amount of the modified polypropylene was changed to 30 parts by weight, the amount of the modified EPR was changed to 10 parts by weight (for 100 parts by weight of the total amount of the nylon-6 and modified polypropy lene), and the amount of the potassium titanate whisker was changed to 10 parts by weight. The results are shown in Table 1.

Comparative Example 1

The same procedure as in Example 1 was repeated, except that the potassium titanate whisker was replaced by 20 parts by weight of talc. The results are shown in Table 1.

Comparative Example 2

The same procedure as in Comparative Example 1 was repeated, except that the amount of the talc was changed to 30 parts by weight. The results are shown in Table 1.

Comparative Example 3

The same procedure as in Example 7 was repeated, except that the potassium titanate whisker was not added. The results are shown in Table 1.

Comparative Example 4

The same procedure as in Comparative Example 3 was repeated, except that 10 parts by weight of the talc was added. The results are shown in Table 1.

Comparative Example 5

The same procedure as in Comparative Example 4 was repeated, except that the talc was replaced by 10 parts by weight of mica.

Table 1

| Components and properties | Example No. | | | | | | | Comparative Example No. | | | | |
|---|---|---|---|---|---|---|---|---|---|---|---|---|
| | 1 | 2 | 3 | 4 | 5 | 6 | 7 | 1 | 2 | 3 | 4 | 5 |
| Nylon-6 | 40 | 40 | 40 | 40 | 40 | 40 | 70 | 40 | 40 | 70 | 70 | 70 |
| PP+CMP (homo pp or B/C pp base) | homo 60 | homo 60 | homo 60 | homo 60 | homo 60 | homo 60 | B/C 30 | homo 60 | homo 60 | B/C 30 | B/C 30 | B/C 30 |
| Modified EPR | 20 | 20 | 20 | 20 | 20 | 30 | 10 | 20 | 20 | 10 | 10 | 10 |
| Potassium titanate whisker* | 20 | 30 | 10 | 15 | 20 | 20 | 10 | - | - | - | - | - |
| Talc | - | - | 20 | 15 | 10 | - | - | 20 | 30 | - | 10 | - |
| Mica | - | - | - | - | - | - | - | - | - | - | - | 10 |
| Tensile strength | 310 | 350 | 320 | 330 | 340 | 260 | 540 | 260 | 280 | 400 | 500 | 520 |
| Flexural modulus, 23°C | 16600 | 21000 | 18900 | 19200 | 19700 | 12900 | 20400 | 12600 | 15800 | 15300 | 20200 | 24000 |
| Izod impact strength, 23°C | 19 | 19 | 17 | 18 | 18 | 24 | 20 | 10 | 8 | 20 | 15 | 8 |
| Gloss | - | - | - | - | - | - | 83 | - | - | 67 | 81 | 75 |
| Heat distortion temperature | 126 | 131 | 127 | 129 | 30 | 110 | 153 | 112 | 121 | 109 | 140 | 156 |
| Linear expansion coefficient, mm/mm/°C | 6.5 | 5 | 8 | 7 | 5.5 | 6 | 8 | 9 | 8.5 | 12 | 10 | 8 |

* "Tismo-D", having a fiber diameter of 0.2-0.5 μm and a fiber length of 10-20 μm, a product of Ohtsuka Kagaku Co., Ltd.)

The present invention provides a thermoplastic resin composition incorporated with whisker which exhibits improved stiffness and heat resistance and a low coefficient of linear expansion without any adverse effect on impact strength and surface gloss.

**Claims**

1. A thermoplastic resin composition incorporated with whisker which comprises:

(a) 1-90 parts by weight of modified polypropylene partly or entirely modified with an unsaturated carboxylic acid or a derivative thereof;

(b) 1-90 parts by weight of polyamide;

(c) 1-50 parts by weight of modified rubber partly or entirely modified with an unsaturated carboxylic acid or a derivative thereof for 100 parts by weight of the total amount of said components (a) and (b);

(d) 1-50 parts by weight of potassium titanate whisker having a fiber diameter of 0.1-1.0 μm and a fiber length of 5-50 μm for 100 parts by weight of the total amount of said components (a), (b), and (c); and

(e) 0-50 parts by weight of a filler for 100 parts by weight of the total amount of said components (a), (b), and (c).

2 A composition according to claim 1 wherein the polypropylene and/or the rubber is modified with from 0.01-5 wt% of acid or derivative.

3 A composition according to claim 1 or 2 wherein the polypropylene and/or the rubber is modified with maleic acid, crotonic acid, end-cis-bicyclo (2.2.1) hept-5-ene-2,3-dicarboxylic acid, fumaric acid, acrylic acid or isocrotonic acid or derivative, especially maleic anhydride.

4 A composition according to any preceding claim wherein the modified rubber is derived from EPR, EBR or EPDM.

5 A composition according to any preceding claim wherein the filler comprises a silicate, carbonate, sulfate, mica, glass fibre or carbon fibre.

6 A process for producing a thermoplastic resin composition incorporated with whisker, said process comprising melt-mixing in an extruder:

(a) 1-90 parts by weight of modified polypropylene partly or entirely modified with an unsaturated carboxylic acid or a derivative thereof;

(b) 1-90 parts by weight of polyamide;

(C) 1-50 parts by weight of modified rubber partly or entirely modified with an unsaturated carboxylic acid or a derivative thereof for 100 parts by weight of the total amount of said components (a) and (b);

(d) 1-50 parts by weight of potassium titanate whisker having a fiber diameter of 0.1-1.0 μm and a fiber length of 5-50 μm for 100 parts by weight of the total amount of said components (a), (b), and (c); and

(e) 0-50 parts by weight of a filler for 100 parts by weight of the total amount of said components (a), (b), and (c),

said potassium titanate whisker being fed to the extruder at an intermediate point somewhere between the front and rear ends of the extruder.

7 A process for producing a thermoplastic resin composition incorporated with whisker as claimed in Claim 6, wherein the potassium titanate whisker is fed to the extruder at an internmediate point corresponding to 3/5-4/5 of the screw length.

8 The use of a composition according to any of claims 1 to 5 or produced by the process according to claim 6 or 7, as an engineering plastic molding material, especially for automotive parts and household electrical applicances.